# FASCICULE DE BREVET EUROPEEN

(11) **EP 3 304 698 B1**
(45) Date de publication et mention de la délivrance du brevet: **16.10.2019**
(21) Numéro de dépôt: 16721832.0
(22) Date de dépôt: 12.05.2016
(51) Int. Cl.: H02K 1/20, H02K 1/14

(54) **MACHINE ELECTRIQUE TOURNANTE AVEC UN STATOR A ENCOCHES AVEC REFROIDISSEMENT, NOTAMMENT MOTEUR ELECTRIQUE ET PROCEDE POUR REALISER UNE TELLE MACHINE**
ROTIERENDE ELEKTRISCHE MASCHINE MIT EINEM GEKÜHLTEN GENUTETEN STATOR, INSBESONDERE EINEM ELEKTROMOTOR
ROTATING ELECTRICAL MACHINE COMPRISING A COOLED SLOTTED STATOR, IN PARTICULAR AN ELECTRIC MOTOR

(30) Priorité: 28.05.2015 FR 1554838
(43) Date de publication de la demande: 11.04.2018
(73) Titulaire: IFP Energies nouvelles, 92500 Rueil-Malmaison (FR); Mavel S.r.l., 11026 Pont Saint Martin (AO) (IT)
(72) Inventeur: DIB, Wissam, 92150 Suresnes (FR); DESARNAUD, Fabien, 78260 Acheres (FR); FAVRE, Luca, 11010 Valpelline (AO) (IT); BETTONI, Davide, 10010 Settimo Vittone To Italy (IT)
(74) Mandataire: IFP Energies nouvelles
(86) Numéro de dépôt international: PCT/EP2016/060694
(87) Numéro de publication internationale: WO 2016/188763

(56) Documents cités:
- EP-A2- 2 251 957
- US-A- 3 783 318
- US-A1- 2007 080 599
- US-A1- 2009 224 617

## Description

La présente invention se rapporte à une machine électrique tournante comportant un stator à encoches avec refroidissement et plus particulièrement à un moteur électrique.

Généralement, une telle machine électrique comporte un stator et un rotor disposés coaxialement l'un dans l'autre.

Le rotor est formé d'un corps de rotor portant des générateurs de flux magnétiques, tels que des aimants permanents.

Ce rotor est généralement logé à l'intérieur d'un stator qui porte des enroulements électriques (ou bobinages d'induit) permettant de générer un champ magnétique permettant d'entraîner en rotation le rotor en association avec le champ magnétique généré par les aimants.

Généralement, le stator est de forme annulaire et est logé à l'intérieur d'un support tubulaire pour y être fixé.

Ce stator comprend une pluralité d'encoches radiales ouvertes en direction du rotor et s'étendant tout au long du pourtour du stator. Ces encoches sont prévues pour recevoir les bobinages d'induit qui sont introduits dans le stator par la face ouverte des encoches puis y sont fixés par tous moyens connus.

Lors du fonctionnement d'une telle machine électrique, les bobinages sont parcourus par un courant électrique pour générer le champ magnétique nécessaire à l'entraînement en rotation du rotor.

Comme cela est largement connu, lorsqu'un courant parcourt un enroulement électrique, il se dégage un flux thermique par effet Joule. En conséquence, ce flux thermique doit être évacué sous peine de détériorer les bobinages et/ou la machine électrique.

On peut mentionner ceux utilisant un fluide de refroidissement, comme de l'eau tel que décrit dans le document FR 2 407 597, qui circule entre le support tubulaire de stator et une enveloppe extérieure coaxiale en formant ainsi un ou plusieurs canaux axiaux de refroidissement.

Le fluide qui circule dans ces canaux capte les calories provenant des bobinages pour les évacuer à l'extérieur de la machine et assurer ainsi le refroidissement de ces bobinages.

Il est également connu par le document FR 1 424 667 de disposer sur l'extérieur du support tubulaire de stator une multiplicité d'ailettes qui vont permettre d'évacuer la chaleur provenant des bobinages par conduction et convention.

Ces dispositifs, bien que donnant satisfaction, présentent des inconvénients non négligeables.

En effet, tous ces dispositifs nécessitent des aménagements spécifiques, soit avec des canaux de circulation de fluide de refroidissement, soit une configuration particulière du support de stator pour la mise en place des ailettes de refroidissement.

Tous ces aménagements entraînent une complexité de réalisation de la machine, un surcoût de réalisation ainsi qu'une augmentation de l'encombrement important.

Le brevet EP 2251957 A1 et la demande de brevet US2009/2254617 décrivent des machines électriques comprenant un stator et un rotor. Le stator est équipée d'ailettes de refroidissement. En particulier, le brevet EP 2251957 décrit que les tôles successives sont pivotées les unes par rapport aux autres suivant un angle correspondant à l'étendue angulaire d'une face externe du stator.

Le brevet US 3783318 concerne une machine électrique avec un stator et un rotor. Les encoches du stator sont de dimensions variables.

La demande de brevet US 2007/0080599 concerne une machine électrique avec un stator possédant des paires d'encoches décalées angulairement l'une de l'autre.

La présente invention vise à remédier aux inconvénients énumérés ci-dessus grâce à un stator qui se dispense d'un support de stator tout en réalisant son refroidissement.

A cet effet, la présente invention concerne une machine électrique comprenant un rotor et un stator comportant un empilage de tôles pour former un corps de stator avec au moins deux paires d'encoches de réception pour des générateurs de flux magnétiques pouvant être parcourus par un courant électrique, lesdites paires d'encoches étant décalées angulairement l'une de l'autre d'un angle, caractérisée en ce que les tôles comportent des moyens de refroidissement pour le stator et en ce que les tôles portent un alésage dans la portion pleine entre deux paires d'encoches et une portion creuse entre les deux paires d'encoches suivantes.

Les moyens de refroidissement peuvent comprendre au moins une saillie radiale externe s'érigeant à partir du bord externe des tôles.

La saillie peut s'ériger à partir d'une portion pleine entre deux paires d'encoches voisines.

La saillie peut avoir une étendue circonférentielle d'étendue angulaire au plus égale au décalage angulaire entre deux paires d'encoches.

La saillie d'une tôle du corps de stator peut être décalée angulairement d'un angle par rapport à la saillie d'une tôle voisine.

L'invention concerne également un procédé pour réaliser une machine électrique selon l'une des revendications précédentes, caractérisé en ce que :
- l'on réalise des tôles de stator avec une bordure annulaire portant au moins deux paires d'encoches décalées angulairement l'une de l'autre d'un angle, lesdites paires d'encoches étant séparées par une portion pleine portant un alésage et une portion creuse,
- l'on agence sur les tôles au moins une saillie radiale externe à partir d'une portion pleine,
- l'on pivote successivement l'une des tôles autour de son centre d'un angle par rapport à la tôle voisine,
- après pivotement des tôles et empilage, l'on fixe les tôles les unes par rapport aux autres.

On peut fixer les tôles par un tirant traversant les alésages et les portions creuses.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est une vue en perspective du rotor et du stator de la machine électrique selon l'invention,
- la figure 2 qui est une vue schématique d'une tôle de stator de la figure 1,
- la figure 3 qui est une vue en perspective des différents éléments du stator et
- la figure 4 qui montre la disposition de deux tôles de stator l'une par rapport à l'autre de la machine électrique selon l'invention.

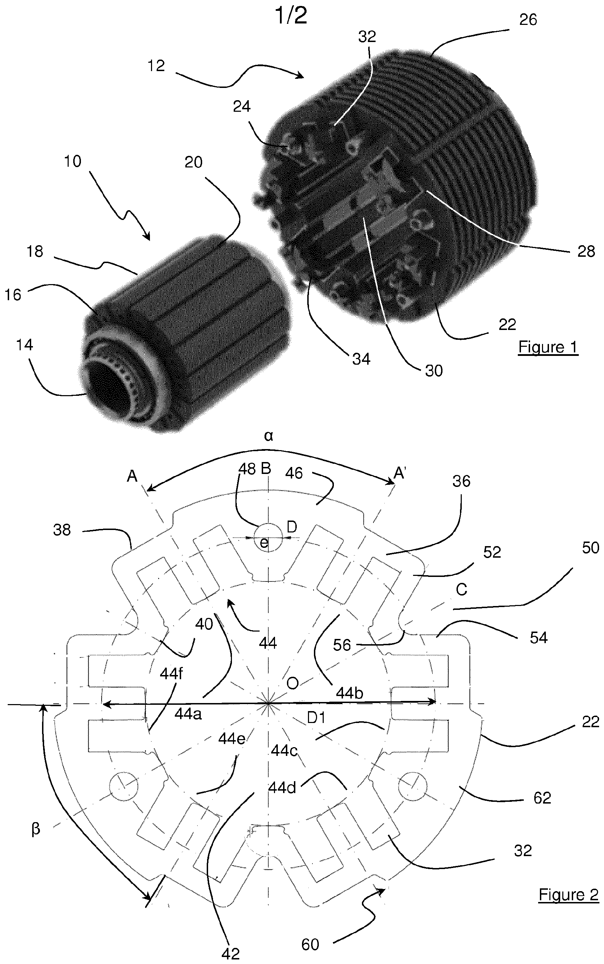

Comme illustré sur la figure 1 une machine électrique tournante, ici un moteur électrique, comporte un rotor 10 et un stator tubulaire 12 qui, à l'état monté, sont imbriqués l'un dans l'autre en étant coaxiaux tout en laissant le rotor libre en rotation.

Le rotor comporte, de manière connue en soi, un arbre 14, de préférence magnétique, sur lequel est placé un empilage de tôles ferromagnétiques planes identiques 16, qui sont assemblées les unes aux autres par tous moyens connus pour former un corps de rotor 18.

Ce rotor porte des générateurs de flux magnétiques, ici des aimants permanents 20 qui sont, dans l'exemple illustré, sous forme de barreau de longueur sensiblement égale à la longueur de l'empilage de tôles.

Le stator comporte également un empilage de tôles ferromagnétiques planes identiques 22 qui sont reliées entre elles par tous moyens connus, comme des tirants filetés 24, pour former un corps de stator tubulaire 26.

Ce corps de stator comporte une périphérie annulaire 28 et une partie centrale évidée 30.

La périphérie annulaire du corps comprend une pluralité d'encoches radiales de section sensiblement rectangulaire 32 ouvertes en direction de la partie centrale 30 et s'étendent tout au long de la périphérie du stator tubulaire. Ces encoches sont prévues pour recevoir les bobinages d'induit 34 qui sont introduits dans le stator par la face ouverte des encoches puis y sont fixés par tous moyens connus.

On se rapporte maintenant en plus à la figure 2 qui illustre la configuration d'une tôle de stator 22 qui présente une configuration sensiblement annulaire avec un centre O.

Cette tôle comprend une bordure annulaire plate 36, délimitée par un bord externe 38 et un bord interne 40, et un évidement central 42.

La bordure comporte au moins deux paires 44 d'encoches radiales 32. Une paire, d'axe radial général A, est décalé d'une paire voisine, d'axe radial général A' d'un angle a.

Ainsi, dans le cas de l'exemple illustré, il est prévu six paires d'encoches 44a à 44f régulièrement reparties circonférentiellement avec un angle de décalage α de 60°.

La paire d'encoches 44a est séparée de la paire d'encoche voisine 44b, en considérant le sens horaire, par une portion pleine 46, de forme trapézoïdale, comportant un alésage 48 de diamètre D. Cet alésage a un axe radial B qui est situé à distance angulaire égale, c'est-à-dire d'angle α/2, entre les deux paires d'encoches et à égale distance entre les bords externe 38 et interne 40. Cet alésage à un diamètre D dont le centre e est placé sur un diamètre D1.

La paire d'encoches 44b est séparée de la paire d'encoche voisine 44c, toujours en considérant le sens horaire, par une portion creuse 50, de forme triangulaire, d'axe radial C à distance angulaire égale, c'est-à-dire d'angle α/2, entre ces paires d'encoches. Cette portion creuse est ouverte sur le bord externe 38 et est délimitée par deux flancs inclinés 52 et 54 venant rejoindre un somment 56 dont la partie interne 58 est arrondie en correspondant en partie au profil de l'alésage 48 avec une localisation diamétrale D1 sensiblement identique.

Ainsi, la tôle comporte successivement, une paire d'encoches, une portion pleine avec un alésage, une paire d'encoches, une portion creuse, une paire d'encoches,...

Sur l'exemple montré, la tôle comprend donc six paires d'encoches décalées chacune d'un angle α de 60°, trois portions pleines avec des alésages décalées angulairement de 120° (soit 2α) et trois portions creuses d'angle de 120° (soit également 2α).

Comme mieux illustré sur la figure 2, la tôle comprend des moyens de refroidissement 60 pour évacuer le flux thermique provenant du stator.

Ces moyens sont formés par au moins une saillie radiale externe 62 s'érigeant à parti du bord externe 38 de la tôle et d'axe radial confondu avec celui (axe B) des alésages.

Cette saillie est avantageusement issue directement de la tôle et s'étend circonférentiellement sur une étendue angulaire β au plus égale à l'étendue angulaire α en étant disposée entre deux paires d'encoches et en regard de la portion pleine séparant ces deux paires d'encoches.

Cette tôle comprend donc trois saillies qui font office d'ailettes de refroidissement lors de leur balayage par de l'air extérieur.

Bien entendu, l'homme du métier sera à même de calculer la hauteur de la saillie en fonction de la quantité de chaleur à évacuer.

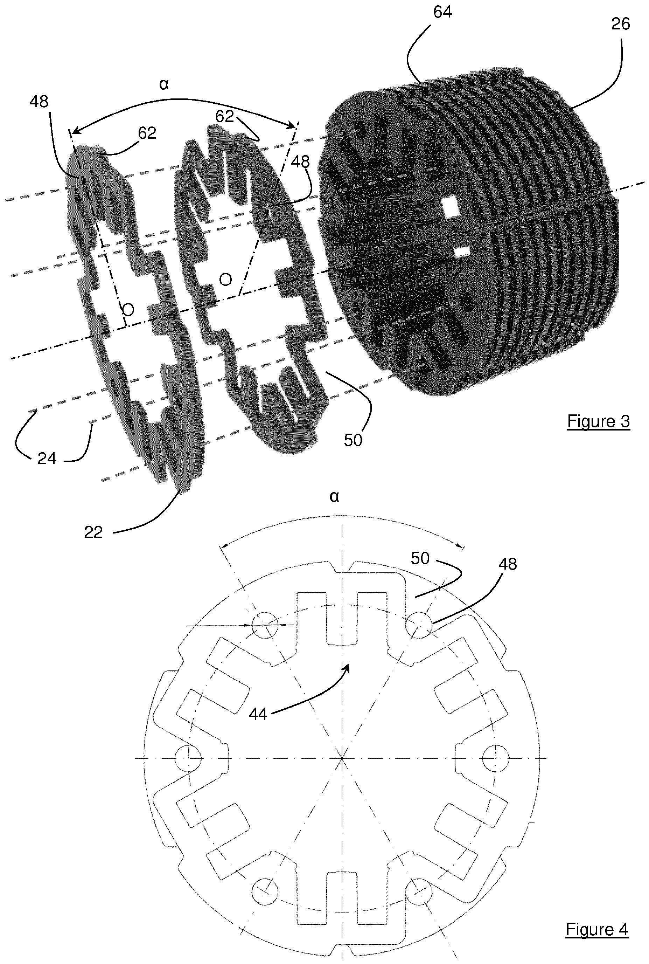

Pour obtenir le corps de stator 26 comme illustré sur les figures 3 et 4, on utilise des tôles toutes identiques puis l'empilage de tôles est réalisé en faisant pivoter d'un angle a, ici de 60°, une tôle autour de son centre O par rapport à la tôle voisine.

Plus précisément, une tôle sur deux de cet empilage est pivotée autour de son centre O.

Suite à ce pivotement et comme montré plus particulièrement sur la figure 3, l'alésage 48 d'une portion pleine d'une tôle 22 est décalé d'un angle α de 60° par rapport à l'alésage 48 d'une portion pleine d'une tôle 22 voisine et la saillie 62 d'une tôle 22 est décalée également d'un angle α de 60° par rapport à la saillie 62 d'une tôle 22 voisine en laissant subsister un espace libre 64 pour la circulation de l'air extérieur entre ces saillies.

Ceci permet d'obtenir des surfaces d'échange optimisées avec l'environnement de la machine en facilitant les échanges de flux thermiques avec l'extérieur.

Tel que montré sur la figure 4, comme les paires d'encoche 44 sont décalées de 60°, ces dernières sont toutes en correspondance les unes avec les autres, mais les alésages 48 sont en regard des portions creuses 50.

Après la réalisation de cet empilage de tôles, les tirants filetés 24 (représentés par un trait pointillé sur la figure 3) sont introduits dans cet empilage au travers des alésages 48 et des portions creuses 50 et les tôles sont assemblées les unes aux autres après vissage de ces tirants. Suite à cet assemblage, les bobinages d'induit sont introduits dans les encoches et ensuite fixés par tous moyens connus.

Bien entendu, l'angle α de pivotement est directement relié au nombre de paires d'encoches que porte la tôle. Ainsi, cet angle α est égale à 360°/n ou n est le nombre de paires d'encoches.

## Revendications

1. Machine électrique comprenant un rotor (10) et un stator (12) comportant un empilage de tôles (22) pour former un corps de stator (26) avec une pluralité de paires (44) d'encoches (32) de réception pour des générateurs de flux magnétiques (34) pouvant être parcourus par un courant électrique, lesdites paires d'encoches étant décalées angulairement l'une de l'autre d'un angle (a), **caractérisée en ce que** les tôles comportent des moyens de refroidissement (60) pour le stator et **en ce que** les tôles (22) portent un alésage (48) dans une portion pleine (46) entre deux paires d'encoches et une portion creuse (50) entre les deux paires d'encoches suivantes.

2. Machine électrique selon la revendication 1, **caractérisée en ce que** les moyens de refroidissement comprennent au moins une saillie radiale externe (62) s'érigeant à partir du bord externe (38) des tôles.

3. Machine électrique selon la revendication 2, **caractérisée en ce que** la saillie (62) s'érige à partir d'une portion pleine (46) entre deux paires d'encoches voisines.

4. Machine électrique selon l'une des revendications 2 ou 3, **caractérisé en ce que** la saillie (62) a une étendue circonférentielle d'étendue angulaire (β) au plus égale au décalage angulaire (α) entre deux paires d'encoches.

5. Machine électrique selon l'une des revendications 2 à 4, **caractérisée en ce que** la saillie (62) d'une tôle (22) du corps de stator est décalée angulairement d'un angle (α) par rapport à la saillie (62) d'une tôle (22) voisine.

6. Procédé pour réaliser une machine électrique selon l'une des revendications précédentes, **caractérisé en ce que** :
- l'on réalise des tôles (22) de stator avec une bordure annulaire (36) portant une pluralité de paires (44) d'encoches (32) décalées angulairement l'une de l'autre d'un angle (a), les tôles (22) portant un alésage (48) dans une portion pleine (46) entre deux paires d'encoches et une portion creuse (50) entre les deux paires d'encoches suivantes, et les tôles (22) comportant au moins une saillie radiale externe (62) à partir d'une portion pleine (46),
- l'on pivote successivement l'une des tôles autour de son centre (O) d'un angle (α) par rapport à la tôle voisine,
- après pivotement des tôles et empilage, l'on fixe les tôles les unes par rapport aux autres.

7. Procédé selon la revendication 6, **caractérisée en ce que** l'on fixe les tôles par un tirant (24) traversant les alésages et les portions creuses.

## Patentansprüche

1. Elektrische Maschine, umfassend einen Rotor (10) und einen Stator (12), umfassend einen Blechstapel (22), um einen Statorkörper (26) mit einer Vielzahl von Paaren (44) von Aufnahmekerben (32) für Magnetstromgeneratoren (34) zu bilden, die von einem elektrischen Strom durchströmt werden können, wobei die Kerbenpaare im Winkel zueinander um einen Winkel (α) versetzt sind, **dadurch gekennzeichnet, dass** die Bleche Kühlmittel (60) für den Stator umfassen, und dass die Bleche (22) eine Bohrung (48) in einem vollen Abschnitt (46) zwischen zwei Kerbenpaaren und einen hohlen Abschnitt (50) zwischen den zwei folgenden Kerbenpaaren tragen.

2. Elektrische Maschine nach Anspruch 1, **dadurch gekennzeichnet, dass** die Kühlmittel mindestens einen äußeren radialen Vorsprung (62) umfassen, der vom äußeren Rand (38) der Bleche aufragt.

3. Elektrische Maschine nach Anspruch 2, **dadurch gekennzeichnet, dass** der Vorsprung (62) von einem vollen Abschnitt (46) zwischen zwei benachbarten Kerbenpaaren aufragt.

4. Elektrische Maschine nach einem der Ansprüche 2 oder 3, **dadurch gekennzeichnet, dass** der Vorsprung (62) ein Umfangsausmaß mit einer Winkelausdehnung (β) höchstens gleich dem Winkelversatz (α) zwischen zwei Kerbenpaaren hat.

5. Elektrische Maschine nach einem der Ansprüche 2 bis 4, **dadurch gekennzeichnet, dass** der Vorsprung (62) eines Blechs (22) des Statorkörpers im Winkel um einen Winkel (α) in Bezug zum Vorsprung (62) eines benachbarten Blechs (22) versetzt ist.

6. Verfahren zur Herstellung einer elektrischen Maschine nach einem der vorhergehenden Ansprüche, **dadurch gekennzeichnet, dass**:
- Statorbleche (22) mit einer Winkelumrandung (36) hergestellt werden, die eine Vielzahl von Paaren (44) von Kerben (32) tragen, die im Winkel um einen Winkel (α) zueinander versetzt sind, wobei die Bleche (22) eine Bohrung (48) in einem vollen Abschnitt (46) zwischen zwei Kerbenpaaren und einen hohlen Abschnitt (50) zwischen den zwei folgenden Kerbenpaaren tragen, und wobei die Bleche (22) mindestens einen äußeren radialen Vorsprung (62) von einem vollen Abschnitt (46) ausgehend umfassen,
- nacheinander eines der Bleche um seine Mitte (O) um einen Winkel (α) in Bezug zum benachbarten Blech geschwenkt wird,
- nach dem Schwenken der Bleche und dem Stapeln die Bleche in Bezug zueinander befestigt werden.

7. Verfahren nach Anspruch 6, **dadurch gekennzeichnet, dass** die Bleche durch eine durch die Bohrungen und die hohlen Abschnitte verlaufende Zugstange (24) befestigt werden.

## Claims

1. Electric machine comprising a rotor (10) and a stator (12) comprising a stack of laminations (22) to form a stator body (26) with a plurality of pairs (44) of slots (32) to accept magnetic flux generators (34) through which an electric current may pass, the said pairs of slots being angularly offset from one another by an angle (α), **characterized in that** the laminations comprise cooling means (60) for the stator, and **in that** the laminations (22) have a bore (48) in a solid portion (46) between two pairs of slots and a hollow (50) between the next two pairs of slots.

2. Electric machine according to Claim 1, **characterized in that** the cooling means comprise at least one external radial projection (62) standing proud from the external edge (38) of the laminations.

3. Electric machine according to Claim 2, **characterized in that** the projection (62) stands proud from a solid portion (46) between two adjacent pairs of slots.

4. Electric machine according to one of Claims 2 and 3, **characterized in that** the projection (62) has a circumferential extent of angular extent (β) at most equal to the angular offset (α) between two pairs of slots.

5. Electric machine according to one of Claims 2 to 4, **characterized in that** the projection (62) of one lamination (22) of the stator body is angularly offset by an angle (α) with respect to the projection (62) of an adjacent lamination (22) .

6. Method for producing an electric machine according to one of the preceding claims, **characterized in that**:
- stator laminations (22) with an annular border (36) bearing a plurality of pairs (44) of slots (32) which are angularly offset from one another by an angle (α) are produced, the laminations (22) having a bore (48) in a solid portion (46) between two pairs of slots and a hollow (50) between the next two pairs of slots, and the laminations (22) comprising at least one external radial projection (62) projecting from a solid portion (46),
- one of the laminations is successively pivoted about its centre (O) by an angle (α) with respect to the adjacent lamination,
- after the laminations have been pivoted and stacked, the laminations are put together.

7. Method according to Claim 6, **characterized in that** the laminations are fixed using a through-bolt (24) passing through the bores and the hollows.
